# EUROPÄISCHE PATENTSCHRIFT

(11) **EP 1 415 362 B1**
(45) Veröffentlichungstag und Bekanntmachung des Hinweises auf die Patenterteilung: **15.10.2008**
(21) Anmeldenummer: 01969615.2
(22) Anmeldetag: 20.08.2001
(51) Int. Cl.: H01M 8/02, H01M 2/02

(54) **POLYMERELEKTROLYTMEMBRAN-BRENNSTOFFZELLENSYSTEM MIT KÜHLMEDIUM-VERTEILUNGSRAUM UND -SAMMELRAUM UND MIT KÜHLUNG DURCH FLUIDE MEDIEN**
POLYMER ELECTROLYTE MEMBRANE FUEL CELL SYSTEM COMPRISING A COOLING MEDIUM DISTRIBUTION SPACE AND COOLING MEDIUM COLLECTION SPACE, AND WITH COOLING EFFECTED BY FLUIDIC MEDIA
SYSTEME DE PILES A COMBUSTIBLE A MEMBRANE ELECTROLYTIQUE POLYMERE COMPORTANT UN ESPACE DE REPARTITION ET UN ESPACE COLLECTEUR D'AGENT REFRIGERANT, AINSI QU'UN MODE DE REFROIDISSEMENT PAR SUBSTANCES FLUIDES

(30) Priorität: 21.08.2000 DE 10040792
(43) Veröffentlichungstag der Anmeldung: 06.05.2004
(73) Patentinhaber: Truma Gerätetechnik GmbH & Co. KG, 85640 Putzbrunn (DE)
(72) Erfinder: SCHIEGL, Andreas, 82041 Oberhaching (DE)
(74) Vertreter: Müller - Hoffmann & Partner
(86) Internationale Anmeldenummer: PCT/EP2001/009582
(87) Internationale Veröffentlichungsnummer: WO 2002/017423

(56) Entgegenhaltungen:
- WO-A-99/57781
- US-A- 5 858 569
- US-A- 6 037 072

## Beschreibung

Die vorliegende Erfindung betrifft ein Brennstoffzellensystem mit einer Mehrzahl an Polymerelektrolytmembran-Einzelbrennstoffzellen, die in Form eines Stapels übereinander angeordnet sind, wobei das Brennstoffzellensystem zur Kühlung mit nicht, schwach oder stark elektrisch leitenden fluiden Medien geeignet ist. Die Erfindung betrifft außerdem ein Verfahren zur Kühlung eines derartigen Brennstoffzellensystems mittels nicht, schwach oder stark elektrisch leitender fluider Medien. Die Brennstoffzellen können mit Brenngas und Oxidationsmittel unter niedrigem oder unter höherem Druck betrieben werden, wobei als Brenngas bevorzugt Wasserstoff oder ein Methanol-Wasser-Gemisch in flüssiger oder gasförmiger Form und als Oxidationsmittel Luft oder Sauerstoff verwendet wird.

Polymerelektrolytmembran-Brennstoffzellen enthalten eine Anode, eine Kathode und eine dazwischen angeordnete Ionenaustauschermembran. Mehrere Einzelbrennstoffzellen bilden einen Brennstoffzellenstapel, wobei die Einzelbrennstoffzellen durch als Stromsammler wirkende bipolare Platten voneinander getrennt werden. Anstelle der bipolaren Platten können auch jeweils eine anodenseitige Polplatte und eine kathodenseitige Polplatte verwendet werden. Zur Erzeugung von Elektrizität wird ein Brenngas, z.B. Wasserstoff, über Gasverteilungskanäle in den Anodenbereich und ein Oxidationsmittel, z.B. Luft oder Sauerstoff, über Gasverteilungskanäle in den Kathodenbereich eingebracht. Das Einbringen der Reaktanden kann sowohl unter Überdruck (etwa 2 x 10⁵ bis 4 x 10⁵ Pa) als auch annähernd bei atmosphärischem Druck (etwa 1, 1 x 10⁵ bis 1,5 x 10⁵ Pa abs) erfolgen. Anode und Kathode enthalten in den mit der Polymerelektrolytmembran in Kontakt stehenden Bereichen jeweils eine Katalysatorschicht. In der Anodenkatalysatorschicht wird der Brennstoff unter Bildung von Kationen und freien Elektronen oxidiert, in der Kathodenkatalysatorschicht wird das Oxidationsmittel durch Aufnahme von Elektronen reduziert. Die Kationen wandern durch die Ionenaustauschermembran zur Kathode und reagieren mit dem reduzierten Oxidationsmittel, wobei, wenn Wasserstoff als Brenngas und Sauerstoff als Oxidationsmittel verwendet werden, Wasser entsteht. Bei der Reaktion von Brenngas und Oxidationsmittel werden große Wärmemengen frei, die mittels Kühlung abgeführt werden müssen. Die Kühlung kann sowohl durch gasförmige Medien, wie z.B. Luft, als auch durch fluide Medien erfolgen.

Bei herkömmlichen Brennstoffzellenstapeln mit Flüssigkeitskühlung erfolgt die Kühlung durch Kühlkanäle in den bipolaren Platten, die aus zentralen Verteil- und Sammelleitungen gespeist werden. Da typischerweise zwischen 20 und 50 bis hin zu mehreren 100 Einzelbrennstoffzellen in Reihe geschaltet werden, muß das Kühlmedium in den zentralen Zu- und Abführungskanälen längs in oder gegen die Stromrichtung durch den Brennstoffzellenstapel geführt werden. Um zu verhindern, daß durch das Kühlmedium die unterschiedlichen elektrischen Potentiale der in Reihe geschalteten Einzelbrennstoffzellen elektrisch miteinander verbunden werden und es somit zu Kurzschlüssen zwischen den Zellen oder zu Materialzersetzungen kommt, wird als Kühlflüssigkeit deionisiertes Wasser verwendet. Deionisiertes Wasser besitzt allerdings ein hohes Aufnahmevermögen für lösliche Ionen aller Art, und daher muß es beim Einsatz in Brennstoffzellensystemen kontinuierlich ersetzt oder gereinigt werden, z.B. durch Ionentauscheranlagen. Eine derartige Reinigung ist häufig erforderlich, da die Kühlmedien üblicherweise durch Wärmetauscheranlagen geführt werden, wo sie sich mit Fremdionen anreichern. Derartige Fremdionen erhöhen nicht nur die elektrische Leitfähigkeit des Kühlmediums in unerwünschter Weise, sondern viele der Fremdionen (Cu²⁺, Ni²⁺) schädigen zudem die Festpolymerelektrolytmembran, wenn das Kühlmedium mit der Membran in direkten Kontakt kommt.

Die Auswahl an geeigneten Kühlmedien bei Polymerelektrolytmembran-Brennstoffzellensystemen mit konventioneller Kühlung ist daher stark eingeschränkt. Es können keine Kühlmedien verwendet werden, die in direktem Kontakt mit der Membran, Katalysatorschicht, Gasdiffusionsschicht oder Bipolarplatte zu deren Schädigung führen könnten, wie das z.B. bei Ölen, mit Fremdionen aus Wärmetauscheranlagen angereichertem Kühlwasser, Kühlwasser mit Frostschutzmittel oder Alkoholen der Fall ist.

Diese Einschränkungen hinsichtlich der verwendbaren Kühlmedien bedingen Einschränkungen der Einsatzmöglichkeiten der Brennstoffzellensysteme. Wird beispielsweise ein deionisiertes Wasser als Kühlmedium verwendendes Brennstoffzellensystem in sehr kalter Umgebung abgeschaltet, kann bis zur erneuten Inbetriebnahme das Kühlmedium eingefroren sein und irreversible Schäden am Brennstoffzellensystem hervorrufen.

Ein weiterer Nachteil bei herkömmlichen Brennstoffzellensystemen sind Durchführungen für Kühlmedium durch den Brennstoffzellenstapel. Diese sind aufwendig in der Herstellung, erfordern eine sorgfältige Abdichtung und nehmen außerdem wertvolle aktive Fläche in Anspruch.

Zudem ist, wenn das Kühlmedium durch zentrale Zu- und Abführungskanäle durch den Stapel geführt wird, die Verteilung des Kühlmediums auf die Kühlkanäle in einer bipolaren Platte oft nicht hinreichend gleichmäßig, so daß sich ungewünschte stärker und schwächer gekühlte Bereiche ergeben. Umgekehrt ist es kaum möglich, Brennstoffzellen im mittigen, in der Regel um einige Kelvin heißeren, Bereich eines Stapels stärker zu kühlen als Einzelbrennstoffzellen im Randbereich des Stapels. US 5 858 569 offenbart ein Brennstoffzellen-System, bei dem Kühlwasser durch eine Wassereinlass-Leitung in das Brennstoffzellen-System eintritt, dann seitlich an ihm entlang strömt und in Kühlplatten gelangt.

Aufgabe der vorliegenden Erfindung ist es daher, die Nachteile des Stands der Technik zu überwinden und ein konstruktiv einfaches Brennstoffzellensystem bereitzustellen.

Aufgabe der vorliegenden Erfindung ist es auch, ein - Brennstoffzellensystem bereitzustellen, das eine optimale Verteilung des Kühlmediums entsprechend dem Ausmaß der erforderlichen Kühlung erlaubt.

Aufgabe der vorliegenden Erfindung ist es insbesondere, ein Brennstoffzellensystem bereitzustellen, das nicht auf die Verwendung elektrisch nicht leitender Kühlmedien beschränkt ist, sondern auch mittels schwach oder stark elektrisch leitender fluider Medien gekühlt werden kann.

Aufgabe der vorliegenden Erfindung ist es außerdem, ein Brennstoffzellensystem bereitzustellen, das mittels Kühlmedien, die irgendwelche Bestandteile der Einzelbrennstoffzellen schädigen können, wenn sie mit ihnen in Kontakt kommen, gekühlt werden kann.

Die Aufgabe wird gelöst durch das Brennstoffzellensystem mit einer Mehrzahl an Polymerelektrolytmembran-Einzelbrennstoffzellen, die in Form eines Stapels übereinander angeordnet sind, wobei
- zwischen einander benachbarten Einzelbrennstoffzellen des Stapels jeweils ein Zwischenraum zur Aufnahme eines Kühlmediums vorgesehen ist,
- an mindestens einer Seitenfläche des Stapels mindestens ein Kühlmedium-Verteilungsraum mit mindestens einer Kühlmedium-Eintrittsöffnung angeordnet ist,
- an mindestens einer Seitenfläche des Stapels mindestens ein Kühlmedium-Sammelraum mit mindestens einer Kühlmedium-Austrittsöffnung angeordnet ist,
- an den Seitenflächen des Stapels, an denen weder ein Kühlmedium-Verteilungsraum noch ein Kühlmedium-Sammelraum angeordnet ist, zwischen einander benachbarten Einzelbrennstoffzellen an deren äußeren Randbereichen jeweils ein Dichtmittel vorgesehen ist, so daß der mindestens eine Kühlmedium-Verteilungsraum, die Zwischenräume zwischen einander benachbarten Einzelbrennstoffzellen und der mindestens eine Kühlmedium-Sammelraum einen von Kühlmedium durchströmbaren Raum bilden.

Die Aufgabe wird ferner gelöst durch das Brennstoffzellensystem mit einer Mehrzahl von Polymerelektrolytmembran-Einzelbrennstoffzellen, die in Form eines Stapels übereinander angeordnet sind, wobei
- einander benachbarte Einzelbrennstoffzellen von bipolaren Platten begrenzt werden, die Durchlässe zur Aufnahme eines Kühlmediums aufweisen,
- an mindestens einer Seitenfläche des Stapels mindestens ein Kühlmedium-Verteilungsraum mit mindestens einer Kühlmedium-Eintrittsöffnung angeordnet ist,
- an mindestens einer Seitenfläche des Stapels mindestens ein Kühlmedium-Sammelraum mit mindestens einer Kühlmedium-Austrittsöffnung angeordnet ist, und
- der mindestens eine Kühlmedium-Verteilungsraum, die Durchlässe in den bipolaren Platten und der mindestens eine Kühlmedium-Sammelraum einen von Kühlmedium durchströmbaren Raum bilden.

Die Aufgabe wird außerdem gelöst durch das Verfahren zur Kühlung eines Brennstoffzellensystems mit einer Mehrzahl an Polymerelektrolytmembran-Einzelbrennstoffzellen, die in Form eines Stapels übereinander angeordnet sind, wobei ein von Kühlmedium durchströmbarer Raum vorgesehen wird, der
- Zwischenräume zwischen einander benachbarten Einzelbrennstoffzellen oder Durchlässe in bipolaren Platten benachbarter Einzelbrennstoffzellen und
- mindestens einen an einer Seitenfläche des Stapels angeordneten Kühlmedium-Verteilungsraum und
- mindestens einen an einer Seitenfläche des Stapels angeordneten Kühlmedium-Sammelraum umfaßt, und wobei
ein fluides Kühlmedium durch den von Kühlmedium durchströmbaren Raum geströmt wird.

Im folgenden wird die Erfindung anhand bevorzugter Ausführungsformen näher erläutert.

Eine Einzelbrennstoffzelle setzt sich mindestens zusammen aus den Komponenten Membranelektrodeneinheit, bestehend aus Membran, kathoden- und anodenseitiger Katalysator- und Gasdiffusionsschicht, sowie einer anodenseitigen und einer kathodenseitigen Polplatte und dem Dichtungssystem. Anstelle der anodenseitigen und kathodenseitigen Polplatten benachbarter Zellen kann auch eine bipolare Platte vorgesehen werden. In den Polplatten und den bipolaren Platten sind häufig Gasverteilungsstrukturen eingearbeitet oder auf sie aufgebracht. Jede Einzelbrennstoffzelle benötigt auch Zuführungen und Abführungen für Brenngas sowie Oxidationsmittel. Die Einzelbrennstoffzellen sind in der Regel rechteckig, können aber auch jede andere gewünschte Form haben. Die Erfindung wird im folgenden beispielhaft, nicht beschränkend, für rechteckige Brennstoffzellen beschrieben.

Zur Kühlung des erfindungsgemäßen Brennstoffzellensystems wird das Kühlmedium an einer Seite in den Brennstoffzellenstapel eingeführt, durchströmt den Stapel, d.h. strömt durch die Zwischenräume zwischen den Brennstoffzellen oder durch die Durchlässe in den bipolaren Platten, und tritt an derselben oder an einer anderen Seite wieder aus dem Stapel aus. Das Kühlmedium wird bevorzugt im Kreislauf geführt.

Der Eintritt des Kühlmediums in den Stapel erfolgt ausgehend von einem Kühlmedium-Verteilungsraum, der an einer Seitenfläche des Stapels angebracht ist.

Nach dem Durchströmen des Stapels wird das Kühlmedium in einem Kühlmedium-Sammelraum gesammelt und aus dem Brennstoffzellensystem entfernt.

Bezüglich Form, Anzahl und Anordnung der Kühlmedium-Verteilungsräume und -Sammelräume sind zahlreiche Variationen möglich. Beispielsweise kann sich ein Verteilungsraum über eine komplette Seitenfläche des Brennstoffzellenstapels erstrecken, während an einer anderen Seitenfläche des Stapels, bei rechteckigen Brennstoffzellen bevorzugt an der entgegengesetzten Seitenfläche, ein Kühlmedium-Sammelraum angebracht ist, der sich ebenfalls über die komplette Seitenfläche des Stapels erstreckt. Bei dieser Ausführungsform fließt das Kühlmedium in hydraulischer Parallelschaltung durch den Stapel. Wenn der Kühlmedium-Verteilungsraum und der Kühlmedium-Sammelraum nicht an entgegengesetzten Seitenflächen des Stapels angebracht sind, ist es zweckmäßig, durch Einbringen geeigneter Strukturen in die Zwischenräume zwischen den Zellen für eine Strömungsführung des Kühlmediums von seinem Eintritt in den Stapel bis zu seinem Austritt aus dem Stapel zu sorgen bzw. die Kühlmedium-Durchlässe in den bipolaren Platten so auszubilden, daß sie vom Kühlmedium-Verteilungsraum zum Kühlmedium-Sammelraum führen.

Kühlmedium-Verteilungsraum und -Sammelraum können gleich oder verschieden geformt sein. Der Verteilungsraum weist eine Kühlmedium-Eintrittsöffnung auf, durch die das Kühlmedium in den Verteilungsraum eintritt, und der Sammelraum weist eine Kühlmedium-Austrittsöffnung auf, durch die das Kühlmedium den Sammelraum wieder verläßt. Insbesondere bei hohen Brennstoffzellenstapeln oder großflächigen Einzelbrennstoffzellen kann es vorteilhaft sein, in dem Verteilungsraum eine Verteilerstruktur zur besseren Strömungsführung des Kühlmediums vorzusehen. Alternativ oder zusätzlich können auch mehrere Kühlmedium-Eintrittsöffnungen in dem Verteilungsraum vorgesehen werden, die ebenfalls eine gleichmäßigere Verteilung des eingebrachten Kühlmediums fördern. Auch der Sammelraum kann mehrere Öffnungen, d.h. Austrittsöffnungen, besitzen und eine Kühlmedium-Verteilerstruktur enthalten. Dann kann gewünschtenfalls die Strömungsrichtung des Kühlmediums problemlos umgekehrt werden.

Der Kühlmedium-Verteilungsraum (analoges gilt für den Sammelraum) kann auch durch Trennwände in zwei oder mehrere Segmente unterteilt sein oder aus Teil-Räumen, die jeder für sich abgeschlossen sind, aufgebaut sein. Jedes Segment oder jeder Teil-Raum weist mindestens eine Kühlmedium-Eintrittsöffnung auf.

So können beispielsweise an einer Seitenfläche des Stapels in Stapelrichtung übereinander drei aneinander angrenzende Kühlmedium-Verteilungsräume vorgesehen werden, wobei in den mittleren Kühlmedium-Verteilungsraum mehr oder kälteres Kühlmedium geströmt wird als in die beiden anderen Kühlmedium-Verteilungsräume. Dadurch ergibt sich eine stärkere Kühlung der Einzelbrennstoffzellen im mittleren Bereich des Stapels, die sich bei gleichmäßiger Kühlung des Stapels auf einer höheren Temperatur befinden würden als die Zellen im Randbereich des Stapels. Die gleiche Wirkung wird erzielt, wenn Kühlmedium gleicher Temperatur und gleicher Menge in die Kühlmedium-Verteilungsräume eingeströmt wird, der mittlere Kühlmedium-Verteilungsraum jedoch weniger Einzelbrennstoffzellen mit Kühlmedium versorgt als die beiden anderen Verteilungsräume, so daß im mittigen Bereich des Stapels eine höhere Strömungsgeschwindigkeit herrscht und dadurch eine bessere Kühlwirkung in der Mitte erzielt wird.

Gemäß einer anderen Variante des erfindungsgemäßen Brennstoffzellensystems können Kühlmedium-Verteilungsräume und/oder Kühlmedium-Sammelräume an mehreren Seitenflächen des Stapels angeordnet werden. Dies ist insbesondere bei bestimmten Zellformen, etwa bei achteckigen Brennstoffzellen, zur Sicherung einer gleichmäßigen Kühlmediumströmung vorteilhaft.

Brennstoffzellensysteme, bei denen das Kühlmedium durch Zwischenräume zwischen den benachbarte Einzelbrennstoffzellen abgrenzenden Polplatten hindurchströmt, müssen an den Stellen, an denen sich kein Kühlmedium-Verteilungsraum und kein Kühlmedium-Sammelraum befindet, durch ein geeignetes Dichtmittel abgedichtet werden, damit das Kühlmedium nicht aus den Zwischenräumen austreten kann. Als Dichtmittel ist jedes Material geeignet, das kühlmediumbeständig sowie bei den Brennstoffzellen-Arbeitstemperaturen beständig ist. Beispielsweise können die Zwischenräume zwischen den Einzelbrennstoffzellen an ihren äußeren Randbereichen mit Silikonstreifen abgedichtet werden, so daß von außen gesehen eine Stapelfolge Einzelbrennstoffzelle-Dichtmittel-Einzelbrennstoffzelle-Dichtmittel etc. entsteht. Das Dichtmittel kann mit den Polplatten der benachbarten Einzelbrennstoffzellen verklebt werden oder selbst mit ihnen verkleben, oder es können auch Dichtmittelstreifen zwischen die Einzelbrennstoffzellen verklebungsfrei eingelegt werden, so daß sich die kühlmediumdichte Abdichtung nach außen erst beim Zusammenspannen der Einzelbrennstoffzellen zu einem Stapel ergibt.

In den Zwischenräumen zwischen den Einzelbrennstoffzellen, d.h. zwischen den die Zellen begrenzenden Polplatten, sind bevorzugt Abstandhalterstrukturen angeordnet. Neben der Gewährleistung des optimalen Abstands zwischen den Einzelbrennstoffzellen können diese Abstandhalterstrukturen weitere Funktionen übernehmen. Wenn sie aus elektrisch leitfähigem Material bestehen, können sie den elektrischen Kontakt zwischen anodenseitiger Polplatte und kathodenseitiger Polplatte benachbarter Einzelbrennstoffzellen herstellen. Außerdem kann ihre Form so gewählt werden, daß sie das Kühlmedium auf einem gewünschten Weg durch die Zwischenräume führen.

Eine Möglichkeit ist beispielsweise, in den Zwischenräumen Abstandhalter in Form von Streifen vorzusehen, die geradlinig oder gewellt, in einem gewünschten Abstand voneinander, von einer Seitenfläche des Stapels zur gegenüberliegenden Seitenfläche des Stapels verlaufen. Alternativ können auch gebogene Abstandhalter vorgesehen werden, die an derselben Seitenfläche des Stapels beginnen und enden. Bei derartigen bogenförmig verlaufenden Abstandhaltern ist es möglich, Kühlmedium-Verteilungsraum und Kühlmedium-Sammelraum an derselben Seitenfläche des Stapels anzubringen. Bevorzugt ist ein kombinierter Kühlmedium-Verteilungsraum/Sammelraum mit einer mittig oder etwa mittig in Stapelrichtung verlaufenden Trennwand. Die Trennwand sollte bevorzugt thermisch isolierend sein, um einen Wärmeaustausch zwischen kaltem und erwärmtem Kühlmedium zu verhindern. Die Trennwand teilt den Kühlmedium-Raum in zwei Segmente, wobei das eine Segment der Kühlmedium-Verteilungsraum und das andere Segment der Kühlmedium-Sammelraum ist. Die Segmente sind bevorzugt etwa gleich groß, können aber auch unterschiedlich groß sein. Alternativ können auch zwei getrennte Kühlmedium-Räume verwendet werden, die miteinander verbunden, z.B. verschweißt oder verklebt werden. Bei diesen Varianten ist nur eine Seitenfläche des Stapels mit einem Kühlmedium-Verteilungsraum/Sammelraum versehen. Die übrigen drei Seitenflächen des Stapels sind durch Dichtungen in den Zwischenräumen zwischen den Einzelbrennstoffzellen abgedichtet. Ein besonderer Vorteil dieser Varianten ist die Einsparung von Gewicht einerseits durch Materialeinsparungen und andererseits durch die geringere Menge an Kühlmedium im Stapel. Das Kühlmedium strömt hier an der einen Hälfte einer Seitenfläche des Stapels in die Zwischenräume zwischen den Einzelbrennstoffzellen hinein, im Bogen durch die Zwischenräume hindurch, und an der anderen Hälfte derselben Seitenfläche des Stapels wieder aus dem Stapel heraus. Da die Strömungswege des Kühlmediums im mittleren Bereich eines Zwischenraums kürzer sind als in den Randbereichen, erfolgt hier eine bessere Kühlung, was insofern vorteilhaft ist, als die Einzelbrennstoffzellen in ihrem mittigen Bereich meist wärmer sind als in ihren Randbereichen.

Analoges gilt bei der Ausführungsform mit Kühlmedium-Durchlässen in den bipolaren Platten zwischen den Einzelbrennstoffzellen. Eine Abdichtung von Zwischenräumen erübrigt sich hier natürlich.

Auch bei der Variante mit kombiniertem Kühlmedium-Verteilungsraum/Sammelraum an derselben Seitenfläche des Brennstoffzellenstapels können natürlich Kühlmedium-Verteilungsraum und Kühlmedium-Sammelraum in Stapelrichtung nochmals unterteilt sein, wobei jeder Teil über mindestens eine Kühlmedium-Eintrittsöffnung bzw. -Austrittsöffnung verfügt. Auf diese Weise ist auch hier eine unterschiedlich starke Kühlung in unterschiedlichen Bereichen des Brennstoffzellenstapels möglich.

Bei gebogenen Kühlmedium-Strömungswegen ergibt es sich, daß die Strömungswege unterschiedlich lang sind. Ist eine gleichmäßige Kühlung innerhalb einer Ebene, d.h. in einem Zwischenraum oder in einer bipolaren Platte, erwünscht, ist es zweckmäßig, die Breite der Strömungswege so zu wählen, daß der Druckabfall für jeden Strömungsweg gleich ist. Lange Strömungswege sollten daher breit, kurze dagegen schmäler sein.

Zur Erzielung einer unterschiedlich starken Kühlung im mittigen Bereich des Stapels und in den Endbereichen des Stapels können auch die Strömungswege für das Kühlmittel in den entsprechenden Bereichen unterschiedlich breit ausgebildet werden.

Die räumliche Anordnung oder Ausrichtung des erfindungsgemäßen Brennstoffzellensystems, d.h. die Strömungsrichtung des Kühlmediums, ist beliebig.

Das erfindungsgemäße Brennstoffzellensystem sowie das erfindungsgemäße Verfahren zur Kühlung des Brennstoffzellensystems erfordern grundsätzlich nur das Vorhandensein zweier Einzelbrennstoffzellen, üblicherweise werden jedoch mehrere Brennstoffzellen enthalten sein, die zu einem Brennstoffzellenstapel von typischerweise etwa 10 bis 100 Brennstoffzellen aufgestapelt sind. An der Unterseite und der Oberseite des Stapels sind jeweils Stromsammler, typischerweise in Form von Stromsammelblechen und Stromableitungsblechen, vorgesehen. Die Brennstoffzellen und die Stromsammler werden elektrisch in Reihe geschaltet. Abgeschlossen wird der Brennstoffzellenstapel schließlich von Endplatten, die an der jeweils stapelabgewandten Seite der Stromsammler angebracht werden.

Brennstoffzellenstapel mit Zwischenräumen zwischen den Einzelbrennstoffzellen weisen bevorzugt, wie vorstehend bereits erwähnt, in den Zwischenräumen Abstandhalterstrukturen auf. Diese Abstandhalterstrukturen können aus einem elektrisch leitfähigen Material wie Metall oder kohlenstoffhaltigen Materialien, z.B. Kohlefaserpapier, mit porösen Strukturen, hergestellt werden und gleichzeitig als elektrische Verbinder zwischen den Einzelbrennstoffzellen wirken. Es können jedoch auch elektrisch nicht leitfähige Abstandhalterstrukturen, z.B. aus Kunststoff, eingesetzt und separate elektrische Verbinder vorgesehen werden. Die Abstandhalterstrukturen können separate Bauteile sein, sie können jedoch auch einstückig mit einer Polplatte oder einstückig mit zwei Polplatten ausgebildet werden. Als Materialien für die Abstandhalterstrukturen sind elektrisch leitfähige Materialien bevorzugt. Bei einstückiger Ausbildung mit einer oder mit beiden der angrenzenden Polplatten bestehen sie aus einem identischen Material wie die Polplatten, typischerweise Metall oder kohlenstoffhaltige Materialien.

Die Abmessungen der Zwischenräume müssen so gewählt werden, daß sie ein ungehindertes Strömen des Kühlmediums und eine gleichmäßige Kühlung erlauben. Je nach Größe der Brennstoffzellen kann ein Abstand zwischen benachbarten Zellen von ca. 0,1 - 10 mm, bevorzugt 0,2 - 5 mm, besonders bevorzugt 0,2 - 1 mm, als geeignet betrachtet werden. Eine in den Zwischenräumen vorgesehene Abstandhalterstruktur sollte das Strömen des Kühlmediums möglichst wenig behindern. Abstandhalterstrukturen, die für das Kühlmedium kanalförmige oder porenförmige Strukturen ausbilden, sind bevorzugt. Analoges gilt für Abmessungen und Formgebung der Kühlmedium-Durchlässe in den Bipolarplatten.

Durch die Stapelreihenfolge Brennstoffzelle - Zwischenraum (mit Abstandhalterstruktur) bzw. Bipolarplatte mit Durchlässen - Brennstoffzelle usw. erfolgt eine hydraulische Parallelschaltung des Kühlmediums quer durch den Brennstoffzellenstapel, wodurch eine sehr gleichmäßige Kühlung mit sehr geringen Druckdifferenzen erreicht wird. Typischerweise liegt der Druckverlust, abhängig von der Größe der Brennstoffzellen und der Wärmeaufnahme des Kühlmediums, im Bereich von einigen hundert Pascal bis einigen tausend Pascal.

Zusätzlich zu den Zwischenräumen zwischen den einzelnen Brennstoffzellen kann auch noch je ein Zwischenraum zwischen der untersten bzw. der obersten Brennstoffzelle eines Stapels und dem jeweils angrenzenden Stromsammler vorgesehen werden. Diese zusätzlichen Zwischenräume haben den Vorteil, daß auch über die allerunterste bzw. alleroberste Polplatte eines Stapels Kühlmittel strömt. In diesem Fall ist eine elektrische Verbindung zwischen diesen abschließenden Polplatten und dem Stromsammler erforderlich.

Die Einzelbrennstoffzellen können beliebige handelsübliche Polymerelektrolytmembran-Brennstoffzellen sein, z.B. mit Kohlefaservlies-Elektroden, Polplatten oder Bipolarplatten aus Metall, oder Graphit oder Graphit-Kunststoff-Verbundmaterialien und einer Nafion^{®}-Membran oder Gore-Membran.

Die Form von Kühlmedium-Verteilungsraum und Kühlmedium-Sammelraum ist grundsätzlich beliebig, solange eine kühlmediumdichte Verbindung mit dem Stapel gewährleistet ist. Beispielsweise kann ein U-förmiges Flachmaterialstück verwendet werden, das so an eine Seitenfläche (Kühlmediumeinlaß-Seitenfläche) des Stapels angesetzt wird, daß die beiden U-Schenkel den Randbereich der beiden benachbarten Stapel-Seitenflächen umfassen, wobei ein Dichtmittel, z.B. Silikon oder Butylkautschuk, zwischen Seitenflächen und U-Schenkel für Kühlmediumdichtheit sorgt. Der von dem Flachmaterial und der Kühlmediumeinlaß-Seitenfläche umgrenzte Raum kann nach oben und unten beispielsweise durch die beiden Stapelendplatten verschlossen werden, wobei auch hier ein geeignetes Dichtmittel verwendet wird. Der Kühlmedium-Verteilungsraum und der Kühlmedium-Sammelraum können jedoch z.B. auch die Form einer Wanne mit zu der entsprechenden Seitenfläche passenden Abmessungen haben. Die Wanne wird mittels Dichtmittel angeklebt und/oder angeschraubt. Zur Schaffung einer größeren Dichtfläche können die Seitenwände der Wanne nach innen umgebogen werden. Die umgebogenen Bereiche werden mit Dichtmittel oder Klebstoff versehen und am äußeren Randbereich der Stapel-Seitenfläche befestigt. Geeignete Dichtmittel und Klebstoffe für die oben angegebenen Zwecke sind beispielsweise Silikon, Silikon-Klebstoffe und Butylkautschuk.

Als weitere beispielhafte Variante sei eine Wanne mit einer Grundfläche genannt, die hinsichtlich ihrer Form der Stapelseitenfläche entspricht, aber geringfügig größer ist, so daß die Wanne auf den Stapel aufgesteckt werden kann. Zur Abdichtung wird ein Dichtmittel zwischen Wannenseitenwände und Stapelseitenwände und zwischen Wannenseitenwände und Stapelendplatten eingebracht. Auf diese Weise wird der Kühlmedium-Raum zum Zusammenspannen des Stapels mitverwendet.

Bei Verwendung elektrisch leitender Kühlmedien empfiehlt sich der Einsatz nichtleitender Materialien für alle Bauteile. Die bipolaren Platten bzw. die Polplatten, die Stromsammler und die elektrischen Verbinder, z.B. die Abstandhalterstruktur zwischen den Einzelbrennstoffzellen (wenn sie als elektrischer Verbinder wirkt) müssen natürlich stets aus elektrisch leitfähigem Material bestehen. Diese Bauteile werden bei Verwendung eines leitfähigen oder aggressiven Kühlmediums mit einer entsprechenden Schutzschicht überzogen, z.B. mit Isolierlack bei Verwendung leitfähiger Kühlmedien, oder einem anderen, gegen das verwendete Kühlmedium beständigen Material. Bevorzugt wird der Brennstoffzellenstapel einschließlich Abstandhaltern vollständig zusammengebaut und dann mit Isolierlack überzogen, beispielsweise durch Tauchen. Auf diese Weise wird der gesamte Brennstoffzellenstapel vollständig eingekapselt, isoliert und geschützt.

Zur Versorgung der Einzelbrennstoffzellen mit Brenngas und Oxidationsmittel weisen die Einzelbrennstoffzellen jeweils mindestens eine Brenngaszuführung und mindestens eine Brenngasabführung sowie mindestens eine Oxidationsmittelzuführung und mindestens eine Oxidationsmittelabführung auf. Diese Reaktionsmittelzuführungen und Reaktionsmittelabführungen müssen in einer Weise angeordnet und abgedichtet werden, daß keinerlei Kontakt zwischen Reaktionsmitteln und Kühlmedium möglich ist. In dem erfindungsgemäßen Brennstoffzellensystem liegt eine vollständige Entkopplung der Medien Oxidationsmittel - Brenngas - Kühlmedium und der jeweiligen Dichtungssysteme in den einzelnen Brennstoffzellen und im Brennstoffzellenstapel vor. Durch die Entkopplung der Dichtungssysteme kann der Brennstoffzellenstapel aus bereits vor dem Zusammenbau auf Dichtheit überprüften Einzelzellen aufgebaut werden. Es müssen lediglich die einzelnen Gaszuführkanäle und Gasabführkanäle für Brenngas und Oxidationsmittel zwischen den Einzelbrennstoffzellen abgedichtet werden.

Die Dichtung für das Kühlmedium erfolgt ausschließlich außerhalb der Einzelbrennstoffzellen, d.h. über die Seitenflächen und Endplatten des Brennstoffzellenstapels oder nur an den Seitenflächen des Brennstoffzellenstapels und wird somit aus dem unmittelbaren Brennstoffzelleninneren entfernt. Probleme, wie sie bei Brennstoffzellensystemen, in denen die Abdichtung der einzelnen medienführenden Schichten in den Einzelzellen sowie der Medienzuführungskanäle und Medienabführungskanäle erst beim kompletten Zusammenbau des Stapels erfolgt, nämlich Probleme aufgrund der Verschiedenartigkeit der einzelnen Medien-Dichtungssysteme und Dichtungsanforderungen, werden vermieden.

Eine bevorzugte Art der Entkopplung aller Medien besteht darin, in jeder Einzelbrennstoffzelle zwischen Membranelektrodeneinheit und den beidseitig daran angrenzenden Polplatten bzw. Bipolarplatten Dichtungen dergestalt vorzusehen, daß Teilbereiche der Polplatten bzw. Bipolarplatten und der Membranelektrodeneinheit außerhalb dieser Dichtung liegen, wobei das für die anodenseitige Polplatte (bipolare Platte) und die kathodenseitige Polplatte (bipolare Platte) nichtüberlappende Bereiche sind. Dabei kann es sich um Eckbereiche, aber auch um andere, z.B. mittige Bereiche handeln, so daß sich beispielsweise eine Kreuzströmung der Reaktionsgase ergibt. Der Bereich innerhalb der Dichtung zwischen Membranelektrodeneinheit und anodenseitiger bzw. kathodenseitiger Polplatte (bipolarer Platte) ist der aktive Reaktionsbereich mit Zuführung und Abführung für das jeweils benötigte Reaktionsgas. In den Bereichen außerhalb der Dichtung liegen die Zuführungen und Abführungen des in dem jeweiligen aktiven Reaktionsbereich nicht benötigten Reaktionsgases, die jeweils separat abgedichtet sind. Besonders vorteilhaft an dieser Anordnung ist, daß die Brenngaszuführungen und Brenngasabführungen sowie die Oxidationsmittelzuführungen und Oxidationsmittelabführungen im von Kühlmedium durchströmten Raum liegen und vom Kühlmedium umspült werden. Ein Eindringen von Kühlmedium in die Reaktionsgaskreisläufe ist dennoch nicht zu befürchten, da in den Einzelbrennstoffzellen ein höherer Druck herrscht als im Kühlmediumsystem.

Die Einzelbrennstoffzellen müssen so abgedichtet werden, daß kein Kühlmedium in das Innere der Brennstoffzellen gelangt. Dabei ist es unwesentlich, ob jede Einzelbrennstoffzelle für sich abgedichtet ist oder ob die Abdichtung erst beim Zusammenspannen der Brennstoffzellen zu einem Stapel erfolgt. Die Anforderungen an die Abdichtung der Einzelbrennstoffzellen gegenüber dem Kühlmedium sind relativ leicht zu erfüllen, da in den Einzelbrennstoffzellen ein höherer Druck herrscht als im Kühlmediumsystem. Typisch sind Brenngasdrücke von ca. 0,1 x 10⁵ - 0,5 x 10⁵ Pa über Atmosphärendruck und Oxidationsmitteldrücke von ca. 0,1 x 10⁵ bis 0,5 x 10⁵ Pa über Atmosphärendruck. Das erfindungsgemäße Brennstoffzellensystem ist jedoch grundsätzlich für beliebige brenngasseitige und oxidationsmittelseitige Drücke geeignet, z.B. auch für Drücke von 2 x 10⁵ bis 4 x 10⁵ Pa oder höher. Das Eindringen von Kühlmedium in die Brennstoffzellen ist daher nicht begünstigt.

Die Zuführung und Abführung der Reaktionsgase in den von Kühlmedium durchströmten Raum hinein oder aus ihm heraus erfolgt bevorzugt durch Durchlässe in den Endplatten. Auch das Kühlmedium selbst kann durch Durchlässe in den Endplatten zugeführt oder abgeführt werden, falls die Endplatten Bestandteil des Kühlmedium-Verteilungsraums bzw. Kühlmedium-Sammelraums sind.

Durch die erfindungsgemäße Ausbildung des Brennstoffzellensystems kann, wenn Leitungswasser als Kühlmedium verwendet wird, das erwärmte Kühlmedium direkt in einen Brauchwasserkreislauf eingekoppelt werden. Es kann aber auch ein Wärmetauscher verwendet werden. In jedem Fall ist aufgrund des geringen Druckverlusts beim Durchströmen des Brennstoffzellensystems nur eine geringe Pumpleistung zum Umpumpen erforderlich, so daß z.B. eine einfache Kreiselpumpe verwendbar ist.

Als besondere Vorteile des erfindungsgemäßen Brennstoffzellensystems sind insbesondere hervorzuheben, daß das System konstruktiv sehr einfach aufgebaut ist, die Kühlmedium-Verteilungsräume und Kühlmedium-Sammelräume dem Gesamtsystem nur wenig Gewicht hinzufügen, Kühlmedium-Kreislauf und Reaktionsmittel-Kreisläufe völlig entkoppelt sind und eine ausgezeichnete, gleichmäßig Kühlung gewährleistet wird, die gewünschtenfalls an die Temperaturunterschiede innerhalb eines Stapels angepaßt werden kann.

Alternativ zu den beschriebenen Ausführungsformen mit Kühlmedium-Verteilungsräumen und Kühlmedium-Sammelräumen kann der Brennstoffzellenstapel auch vollständig von einem mit Kühlmedium durchströmten Kühlmedium-Mantel umgeben werden oder in einen von Kühlmedium durchströmten Behälter eingesetzt werden. Dies hat den Nachteil höheren Gewichts, aber den Vorteil, daß durch die Umschließung des gesamten Brennstoffzellenstapels durch das Kühlmedium der Austritt von Reaktionsgasen aus den Zellen an die Atmosphäre unterbunden wird, d.h., das System ist eigensicher gegenüber Undichtigkeiten auf der Brenngasseite sowie der Luft/-Sauerstoffseite. Umgekehrt kann der Eintritt des Kühlmediums in die Reaktionsgaskreisläufe unterbunden werden, da der Druck in den Reaktionsgaskreisläufen über dem Druck des Kühlmediumltreislaufs liegt. Der Kühlmedium-Mantel kann einstückig ausgebildet oder aus mehreren Teilen zusammengesetzt sein, die miteinander verschweißt, verklebt oder in sonstiger Weise dicht verbunden sind. Beispielsweise können ein separater Kühlmedium-Verteilungsraum und Kühlmedim-Sammelraum vorgesehen werden, die längs der nicht von diesen Räumen bedeckten Seitenflächen des Brennstoffzellenstapels jeweils mit einer Platte verbunden werden, so daß sich ein durchgehender Kühlmedium-Mantel ergibt.

Als Materialien für den Kühlmedium-Verteilungsraum, den Kühlmedium Sammelraum, ggfs. den Kühlmedium-Mantel, und die Verteilerstruktur in dem Kühlmedium-Verteilungsraum finden bevorzugt nicht leitende Kunststoffmaterialien Verwendung, z.B. Polypropylen oder Polyvinylidenfluorid. Dies ist jedoch nicht zwingend. Bei Kühlung mit einem nicht leitenden Kühlmedium können grundsätzlich auch elektrisch leitende Materialien verwendet werden, beispielsweise Edelstahl, Aluminium oder Titan. Es ist lediglich erforderlich, daß die bipolaren Platten bzw. die Polplatten sowie die Stromsammler und die den elektrischen Kontakt zwischen den Brennstoffzellen untereinander, bzw. ggfs. zwischen Brennstoffzellen und Stromsammlern, vermittelnden Verbinder keinen elektrischen Kontakt zum Kühlmedium-Verteilungsraum, Kühlmedium-Sammelraum oder Kühlmedium-Mantel haben. Wenn die elektrische Isolierung nicht durch Zwischenräume zwischen den leitenden Bauteilen sichergestellt werden kann, sind an geeigneter Stelle elektrisch isolierende Schichten anzubringen.

Bei einem elektrisch leitenden Kühlmedium-Mantel kann zur elektrischen Isolierung beispielsweise eine elektrisch isolierende Schicht an der Innenseite der an den Brennstoffzellenstapel anliegenden Kühlmediummantel-Seitenfläche angebracht werden, oder es kann zwischen Kühlmediummantel-Seitenflächen und den gegenüberliegenden Seitenflächen des Brennstoffzellenstapels ein Zwischenraum freigelassen werden. Ein derartiger Zwischenraum hat gleichzeitig den Vorteil, daß auch an den Außenflächen des Brennstoffzellenstapels Kühlmedium vorbeiströmt. Ein derartiger Zwischenraum würde typischerweise eine Breite von bis zu 10 mm haben, bevorzugt aber nur bis zu etwa 1 mm betragen, um zu gewährleisten, daß das Kühlmedium bevorzugt durch die Zwischenräume zwischen den Zellen strömt.

Bei der bevorzugten Variante, der separaten Anbringung mindestens eines Kühlmedium-Verteilungsraumes und mindestens eines Kühlmedium-Sammelraumes, an derselben Seitenfläche oder an verschiedenen Seitenflächen des Brenstoffzellenstapels, tritt das Problem eines elektrischen Kontakts üblicherweise nicht auf, da an den Kontaktstellen von Kühlmedium-Verteilungsraum und Kühlmedium Sammelraum mit dem Brennstoffzellenstapel in der Regel ein Dichtmittel, wie z.B. Silikon oder Butylkautschuk, angebracht ist, das elektrisch isolierend wirkt.

Im folgenden werden besonders bevorzugte Ausführungsformen der Erfindung anhand der Figuren näher erläutert.

In den Zeichnungen zeigen:
Fig. 1a einen Schnitt durch zwei benachbarte Brennstoffzellen in Stapelrichtung, d.h., die Schnittebene enthält die Längsachse des Brennstoffzellenstapels, mit dazwischenliegender Abstandhalterstruktur,
Fig. 1b einen Schnitt durch zwei benachbarte Brennstoffzellen in Stapelrichtung mit Durchlässen in der dazwischen angeordneten bipolaren Platte,
Fig. 2a einen Schnitt durch ein erfindungsgemäßes Brennstoffzellensystem in Stapelrichtung,
Fig. 2b und 2c einen Schnitt durch ein erfindungsgemäßes Brennstoffzellensystem in der Ebene eines Zwischenraums zwischen benachbarten Einzelbrennstoffzellen, jeweils mit unterschiedlichen Anordnungen von Kühlmedium-Verteilungsraum, Kühlmedium-Sammelraum und Abstandhalterstrukturen,
Fig. 3a, 3b eine Wandung eines erfindungsgemäßen Kühlmedium-Verteilungsraums, jeweils mit unterschiedlicher Anbringung von Dichtmittel,
Fig. 3c eine erfindungsgemäße Abdichtung zwischen Kühlmedium-Verteilungsraum-Wandung und Stapelendplatte,
Fig. 4a eine Aufsicht auf eine erfindungsgemäße Abdichtung zwischen Membranelektrodeneinheit und anodenseitiger Polplatte sowie der Zuführung und Abführung von Oxidationsmittel,
Fig. 4b eine Aufsicht auf eine erfindungsgemäße Abdichtung zwischen Membranelektrodeneinheit und kathodenseitiger Polplatte sowie der Zuführung und Abführung von Brenngas.

Gleiche Bezugsziffern in den Figuren geben gleiche oder entsprechende Bauteile an.

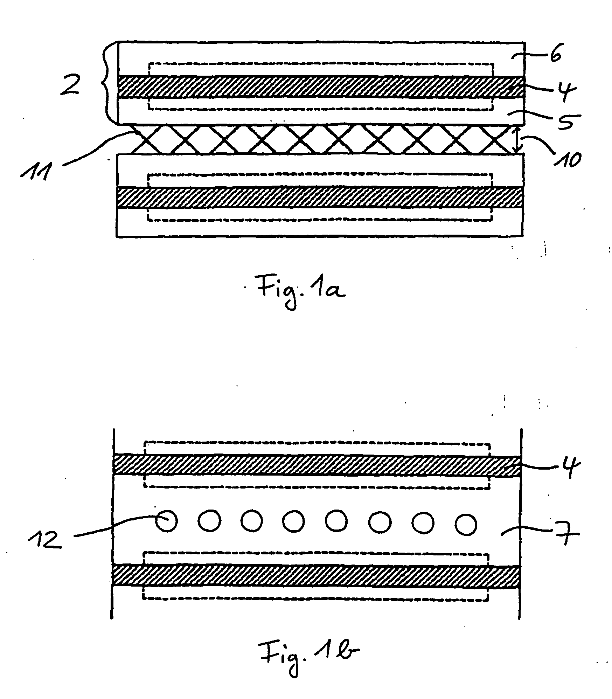

Wie aus Fig. 1a ersichtlich ist, setzt sich eine Einzelbrennstoffzelle 2 prinzipiell zusammen aus den Komponenten Membranelektrodeneinheit 4 - bestehend aus Membran, kathoden- und anodenseitigen Katalysatorschichten und Gasdiffusionsschichten - sowie einer anodenseitigen 5 und kathodenseitigen 6 Polplatte und dem Dichtungssystem. In den Polplatten sind Gasverteilungsstrukturen eingearbeitet, die in Fig. 1a durch die gestrichelten Linien angedeutet sind. Zwischen den beiden Brennstoffzellen befindet sich ein Zwischenraum 10, wobei der elektrische Kontakt zwischen der anodenseitigen Polplatte der einen Zelle und der kathodenseitigen Polplatte der benachbarten Zelle durch eine elektrisch leitfähige Abstandhalterstruktur 11 in dem Zwischenraum 10 sichergestellt wird. Die Abstandhalterstruktur 11 besitzt Durchgänge für ein Kühlmedium 13, das an der Oberfläche der anodenseitigen Polplatte 5 der einen Zelle und der Oberfläche der kathodenseitigen Polplatte 6 der Nachbarzelle entlangströmt und die Zellen dadurch kühlt. Die Durchgänge für das Kühlmedium sind bevorzugt kanal- oder porenförmige Strukturen. Die Abstandhalterstruktur 11 kann entweder Teil einer Polplatte einer Einzelbrennstoffzelle, Teil benachbarter Polplatten zweier Brennstoffzellen oder ein eigenständiges Bauteil sein.

Fig. 1b zeigt ebenfalls zwei benachbarte Einzelbrennstoffzellen, wie sie auch in Fig. 1a gezeigt sind. Die Einzelbrennstoffzellen sind hier jedoch nicht durch einen Zwischenraum voneinander getrennt, sondern besitzen eine gemeinsame bipolare Platte 7 mit Durchlässen 12 für ein Kühlmedium 13. Die Durchlässe 12 sind mit kreisförmigem Querschnitt dargestellt, können jedoch auch eine andere Form haben. Grundsätzlich sind Form, Weite und Anordnung der Durchlässe 12 in der bipolaren Platte 7 beliebig, solange ausreichend Kühlmedium 13 hindurchströmen kann.

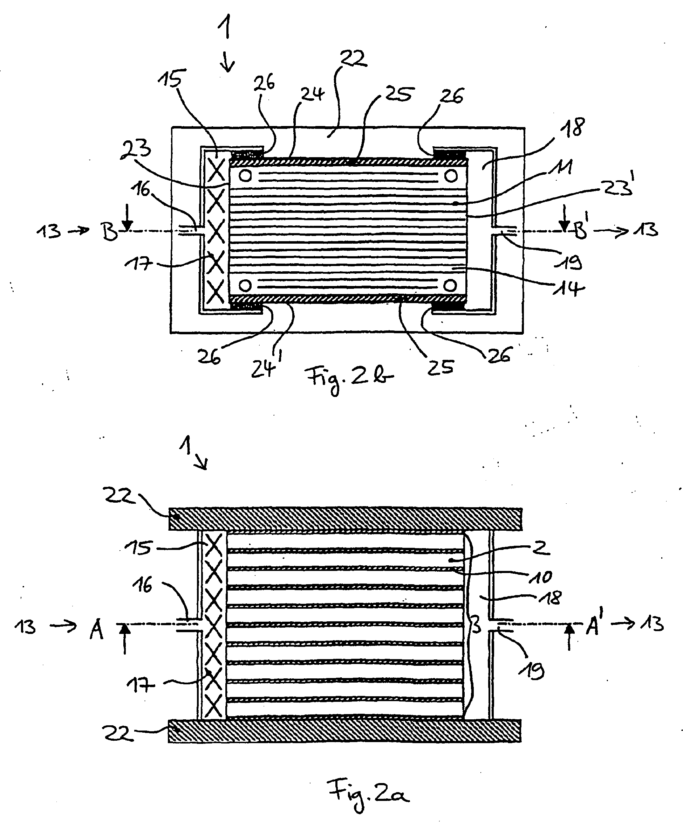

Fig. 2a zeigt einen Schnitt durch ein erfindungsgemäßes Brennstoffzellensystem in Stapelrichtung. Zwischen den Einzelbrennstoffzellen 2 sowie zwischen der ersten und letzten Brennstoffzelle des Stapels 3 und dem jeweils benachbarten Stromsammler an der Endplatte 22 befinden sich Zwischenräume 10, die bei Betrieb von Kühlmedium 13 durchströmt werden. Au zwei gegenüberliegenden Seitenflächen des Brennstoffzellenstapels 3 ist jeweils ein kammerartiger Raum schematisch angedeutet. Der in Fig. 2a an der linken Seite dargestellte Raum ist der Kühlmedium-Verteilungsraum 15, in den eine Kühlmedium-Eintrittsöffnung 16 mündet und in dem sich eine Kühlmedium-Verteilerstruktur 17 befindet. Der in Fig. 2a an der rechten Seite dargestellte Raum ist der Kühlmedium-Sammelraum 18 mit einer Kühlmedium-Austrittsöffnung 19. Den oberen und unteren Abschluß des Brennstoffzellensystems bilden die beiden Endplatten 22, die über die Anordnung aus Brennstoffzellenstapel 3, Kühlmedium-Verteilungsraum 15 und Kühlmedium-Sammelraum 18 überstehen. Auf diese Weise werden beim Zusammenspannen des Stapels 3 gleichzeitig Kühlmedium-Verteilungsraum und Kühlmedium-Sammelraum mit eingespannt. Zur Abdichtung zwischen Kühlmedium-Verteilungsraum 15 bzw. Kühlmedium-Sammelraum 18 und den Endplatten 22 wird bevorzugt ein Dichtmittel verwendet, das ohne Schädigung der verbundenen Teile wieder abgelöst werden kann, beispielsweise Silikon, Silikon-Klebstoffe oder Butylkautschuk, um problemlos Wartungsarbeiten an dem Brennstoffzellenstapel zu erlauben. In den beiden Endplatten 22 befinden sich Durchlässe (hier nicht gezeigt) zur Zuführung von Brenngas und Oxidationsmittel zu dem Brennstoffzellenstapel und zur Abführung von Brenngas und Oxidationsmittel aus dem Brennstoffzellenstapel. Auch Eintrittsöffnungen und Austrittsöffnungen für Kühlmedium in den Kühlmedium-Verteilungsraum oder aus dem Kühlmedium-Sammelraum können in den Endplatten vorgesehen werden. Bei Betrieb des Brennstoffzellensystems 1 tritt Kühlmedium 13 an der Kühlmedium-Eintrittsöffnung 16 in den Kühlmedium-Verteilungsraum 15 ein, strömt durch die Zwischenräume 10 zwischen den Einzelbrennstoffzellen 2 hindurch, an den Oberflächen der Polplatten 5, 6 entlang, und erreicht den Kühlmedium-Sammelraum 18, den es durch die Kühlmedium-Austrittsöffnung 19 wieder verläßt. In den Zwischenräumen 10 sind Abstandhalterstrukturen 11 durch die gestrichelten Linien angedeutet.

Fig. 2b zeigt einen Schnitt durch das Brennstoffzellensystem 1 der Fig. 2a entlang der Linie A A', d.h. einen Schnitt durch einen Zwischenraum 10 zwischen zwei Einzelbrennstoffzellen 2 senkrecht zur Stapelrichtung. In dem Zwischenraum 10 befinden sich Abstandhalter 11, dargestellt in Form paralleler Linien, die gleichzeitig als elektrische Verbinder zwischen den Polplatten der benachbarten Einzelbrennstoffzellen wirken. Das Kühlmedium 13 strömt durch die Zwischenräume 14 zwischen den Abstandhaltern 11. An zwei gegenüberliegenden Seitenflächen 23, 23' des Brennstoffzellenstapels befinden sich jeweils ein kammerartiger Kühlmedium-Verteilungsraum 15 und Kühlmedium-Sammelraum 18, die in Fig. 2b identisch dargestellt sind, was jedoch nicht zwingend ist. Zur Ausbildung des Kühlmedium-Verteilungsraums und des Kühlmedium-Sammelraums wird jeweils ein Flachmaterialstück mit U-förmigem Querschnitt klammerartig über die Stapel-Seitenflächen 24, 24' geschoben und ein Dichtmittel 26 an den Kontaktstellen zwischen Kühlmedium-Verteilungsraum und Stapelseitenflächen 24, 24' angebracht. An zwei gegenüberliegenden Rändern jedes Zwischenraums 10 befindet sich jeweils ein Streifen Dichtmittel 25, der den Zwischenraum 10 nach außen abdichtet. Das Dichtmittel 25 erstreckt sich jeweils über die ganze Länge des Zwischenraums, also auch in den Bereich hinein, der von den Dichtungen 26 überdeckt wird. Die Stapelseitenflächen 24, 24' bestehen hier also aus Dichtmittel 25 und Einzelbrennstoffzellen-Stirnseiten im Wechsel.

Bei Betrieb strömt Kühlmedium 13 durch die Kühlmedium-Eintrittsöffnung 16 in den Kühlmedium-Verteilungsraum 15 mit der darin angeordneten Kühlmedium-Verteilerstruktur 17 ein, tritt an der Stapel-Seitenfläche 23 in den Stapel 3 ein, strömt durch die Kühlmedium-Strömungswege 14 hindurch, verläßt den Stapel an der entgegengesetzten Stapel-Seitenfläche 23', tritt in den Kühlmedium-Sammelraum 18 ein und verläßt diesen durch die Kühlmedium-Austrittsöffnung 19. An den Seitenflächen 24, 24' des Stapels tritt dank des Dichtmittels 25 kein Kühlmedium aus.

Wird die in Fig. 2b gezeigte Ausführungsform entlang der Linie BB' geschnitten, so ergibt sich die Darstellung gemäß Fig. 2a.

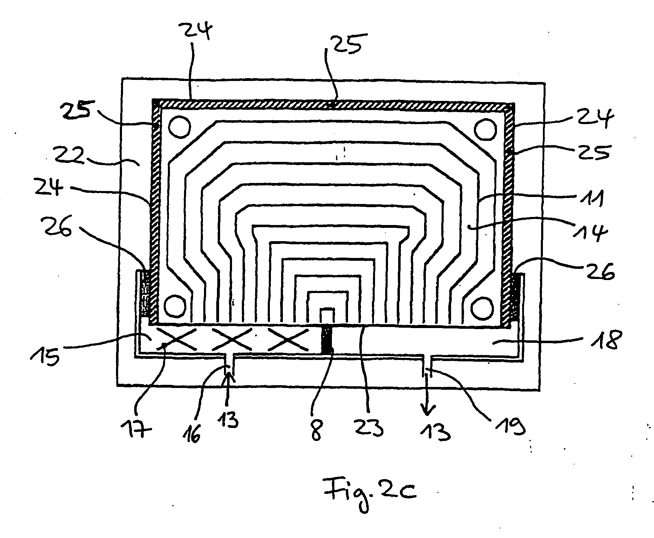

Fig. 2c zeigt ebenfalls einen Schnitt durch ein erfindungsgemäßes Brennstoffzellensystem in der Ebene eines Zwischenraums zwischen zwei Einzelbrennstoffzellen, jedoch sind hier der Kühlmedium-Verteilungsraum 15 und der Kühlmedium-Sammelraum 18 an derselben Seitenfläche 23 des Brennstoffzellenstapels angeordnet. Dabei handelt es sich um einen kombinierten Verteilungs/Sammelraum, der, von außen gesehen, dieselbe Form aufweist wie ein Kühlmedium-Verteilungsraum bzw. -Sammelraum in Fig. 2b. Eine thermisch isolierende Trennwand 8, die etwa mittig in Stapelrichtung verläuft, trennt den Raum in zwei Segmente, von denen jedes separat zugänglich ist, das Segment des Kühlmedium-Verteilungsraums 15 durch die Eintrittsöffnung 16 und das Segment des Kühlmedium-Sammelraums 18 durch die Austrittsöffnung 19. Mittels der Abstandhalterstruktur 11 werden Kühlmedium-Strömungswege 14 ausgebildet, die eine gebogene Form haben und das Kühlmedium von seinem Eintritt an einer Hälfte der Stapelseitenfläche 23 zu seinem Austritt an der anderen Hälfte der Stapelseitenfläche 23 leiten, wobei das Kühlmedium möglichst gleichmäßig in dem Zwischenraum verteilt wird. An den übrigen Seitenflächen 24 des Stapels ist am Rand jedes Zwischenraums ein Dichtmittelstreifen 25 vorgesehen, damit kein Kühlmedium austreten kann.

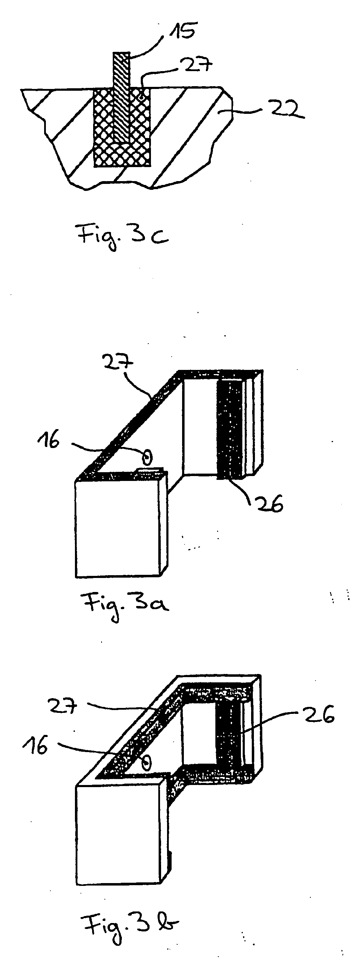

Die Figuren 3a und 3b zeigen jeweils eine Wandung für einen erfindungsgemäßen Kühlmedium-Verteilungsraum 15 mit U-förmigem Querschnitt. Ein Kühlmedium-Sammelraum 18 kann natürlich identisch ausgebildet sein. An der Innenseite der U-Schenkel, die über die Stapelseitenflächen 24, 24' übergreifen, wenn die Wandung des Kühlmedium-Verteilungsraums am Brennstoffzellenstapel 3 angebracht wird, befindet sich ein Dichtmittel 26 zur seitlichen Abdichtung des Kühlmedium-Verteilungsraums. Bei den Ausführungsformen gemäß Fig. 3a und 3b werden die Stapel-Endplatten 22 zur Ausbildung des Kühlmedium-Verteilungsraums mitverwendet. Stehen die Endplatten ausreichend weit über die Grundfläche des Brennstoffzellenstapels 3 über, wie es in den Figuren 2a bis 2c angedeutet ist, können die Endplatten einfach auf das U-förmige Flachmaterialstück aufgesetzt werden und die entstehenden Kanten mit einem Dichtmittel 27 abgedichtet werden, wie es in Fig. 3a gezeigt ist. Wenn die Endplatten an den Seitenflächen 24, 24' des Stapels 3 nicht über die Grundfläche des Stapels überstehen, kann das Dichtmittel 27 zur Abdichtung mit den Stapel-Endplatten an den Innenseiten des U-förmigen Flachmaterialstücks angebracht werden, wie es in Fig. 3b gezeigt ist.

Eine weitere Variante einer Verbindung zwischen einer Endplatte 22 und dem den Kühlmedium-Verteilungsraum bildenden Flachmaterial ist in Fig. 3c gezeigt. In die Endplatten 22 wird eine dem U-förmigen Flachmaterialstück des Kühlmedium-Verteilungsraums entsprechende, umlaufende Nut eingearbeitet, wobei die Breite der Nut etwas größer sein muß als die Wandstärke des Flachmaterialstücks. In die Nut wird ein Dichtmittel eingebracht und dann das Flachmaterialstück in das Dichtmittel eingesenkt oder gedrückt.

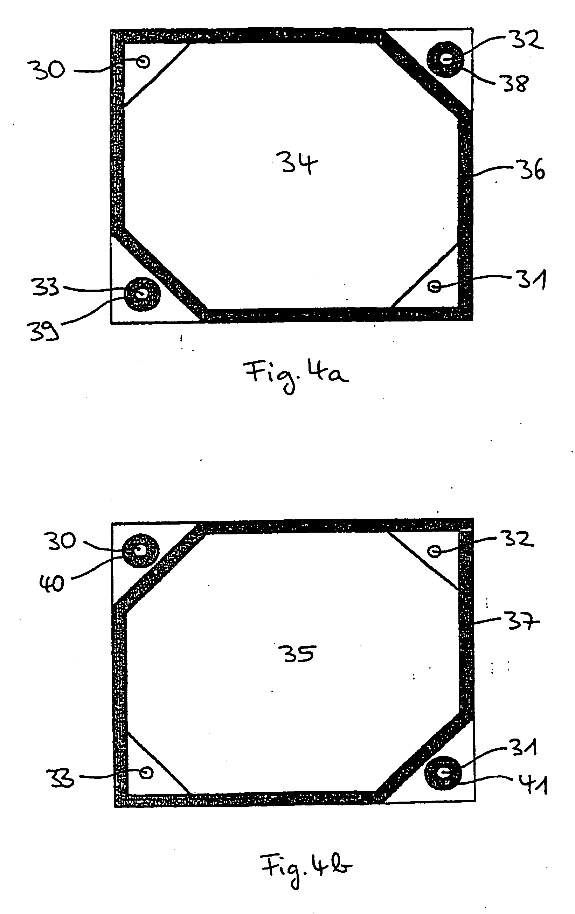

Die Figuren 4a und 4b zeigen eine bevorzugte Ausführungsform der erfindungsgemäßen Entkopplung des Kühlmediumkreislaufs von den Brenngas- und Luft/Sauerstoff führenden Kreisläufen. Zwischen der Membranelektrodeneinheit einer Einzelbrennstoffzelle und den anodenseitigen und kathodenseitigen Polplatten befinden sich jeweils Dichtungen. Fig. 4a zeigt eine Aufsicht auf eine Anodenseite einer Membranelektrodeneinheit mit Dichtung 36 zur anodenseitigen Polplatte. Die Dichtung 36 umschließt einen aktiven Reaktionsbereich 34, läßt aber zwei einander entgegengesetzt angeordnete Eckbereiche der Membranelektrodeneinheit frei. Die Brenngaszuführung 30 und die Brenngasabführung 31 befinden sich innerhalb des aktiven Reaktionsbereichs 34, die Oxidationsmittel-Zuführung 32 und die Oxidationsmittel-Abführung 33 befinden sich außerhalb des aktiven Reaktionsbereichs 34. Die Oxidationsmittel-Zuführung und die Oxidationsmittel-Abführung sind mittels Dichtungen 38 und 39 gegen das Kühlmedium 13 abgedichtet.

Fig. 4b zeigt eine entsprechende Anordnung an der Kathodenseite. Die Dichtung 37 zwischen Membranelektrodeneinheit und Polplatte grenzt einen aktiven Reaktionsbereich 35 ab. Die Oxidationsmittel-Zuführung 32 und die Oxidationsmittel-Abführung 33 befinden sich innerhalb des aktiven Reaktionsbereichs 35. Entgegengesetzt angeordnete Eckbereiche der Membranelektrodeneinheit für die Brenngaszuführung 30 mit Abdichtung 40 und die Brenngasabführung 31 mit Abdichtung 41 liegen außerhalb der Dichtung 37.

Die außerhalb der Dichtung 36 liegenden Eckbereiche der Membranelektrodeneinheit und die außerhalb der Dichtung 37 liegenden Eckbereiche der Membranelektrodeneinheit überlappen einander nicht. Durch diese Anordnung ist eine überschneidungsfreie Zuführung und Abführung der Reaktionsgase zu den aktiven Reaktionsbereichen der Einzelbrennstoffzelle ohne Kontakt zum Kühlmedium gewährleistet, wobei die Zuführungen und Abführungen jedoch vom Kühlmedium umspült werden.

Die erfindungsgemäße Konstruktion ermöglicht die Nutzung von nicht, schwach oder stark elektrisch leitenden fluiden Medien zur Kühlung, da eine vollständige Trennung und Kapselung des Kühlmediums von der aktiven Membranzone vorliegt und im Bedarfsfall - insbesondere bei stark leitenden oder aggressiven fluiden Medien - sowohl die einzelnen Brennstoffzellen als auch der Brennstoffzellenstapel mit einer elektrisch nicht leitenden Isolierschicht oder einer gegen das aggressive Medium beständigen Schutzschicht versehen werden können.

Daraus ergibt sich eine Reihe von Vorteilen:

Der Brennstoffzellenstapel kann selbst mit solchen Kühlmedien betrieben werden, die im direkten Kontakt mit Membran, Katalysatorschicht, Gasdiffusionsschicht, Dichtungssystem und/oder Polplatten zur Schädigung derselben führen könnten (z.B. Öle, mit Fremdionen (Cu²⁺, Ni²⁺) aus Wärmetauscheranlagen angereichertes Kühlwasser, Kühlwasser mit Frostschutzmittel, Alkohole).

Das Brennstoffzellensystem kann durch geeignete Kühlmediumwahl "wintersicher" ausgeführt werden, d.h. z.B., durch die Zugabe von Frostschutzadditiven in das Kühlmedium läßt sich ein Einfrieren der Brennstoffzellen in einem weiten Minustemperaturbereich verhindern.

Unabhängig davon ist die erfindungsgemäße Konstruktion, zumindest wenn sie einen Kühlmantel aufweist, auch bei Verwendung konventioneller Kühlmittel unter Sicherheitsaspekten bedeutsam, denn das Brennstoffzellen-System ist eigensicher gegenüber dem Austritt von Brenngas, da dieses im Falle eines Lecks vollständig vom Kühlmedium aufgenommen wird und nicht in die Umgebung entweichen kann.

Bemerkenswert sind auch der technisch sehr unkomplizierte Aufbau des Systems und die erzielbaren Gewichtseinsparungen, insbesondere bei Verwendung eines kombinierten Kühlmedium-Verteilungs/Sammelraums.

Abschließend wird noch auf die folgenden, für die Erfindung wichtigen Aspekte aufmerksam gemacht:

Die Längsachse des Brennstoffzellenstapels kann senkrecht (wie in den gezeichneten Ausführungsbeispielen), waagerecht oder auch geneigt sein. Das Kühlmedium ist vorzugsweise ein flüssiges Kühlmedium.

## Patentansprüche

1. Brennstoffzellensystem (1) mit einer Mehrzahl an Polymerelektrolytmembran-Einzelbrennstoffzellen (2), die in Form eines Stapels (3) übereinander angeordnet sind,
**dadurch gekennzeichnet, daß**
- zwischen einander benachbarten Einzelbrennstoffzellen (2) des Stapels (3) jeweils ein Zwischenraum (10) zur Aufnahme eines Kühlmediums (13) vorgesehen ist,
- an mindestens einer Seitenfläche (23) des Stapels (3) mindestens ein kammerartiger Kühlmedium-Verteilungsraum (15) mit mindestens einer Kühlmedium-Eintrittsöffnung (16) angeordnet ist,
- an mindestens einer Seitenfläche (23, 23') des Stapels (3) mindestens ein kammerartiger Kühlmedium-Sammelraum (18) mit mindestens einer Kühlmedium-Austrittsöffnung (19) angeordnet ist,
- an den Seitenflächen (24) des Stapels (3), an denen weder ein Kühlmedium-Verteilungsraum (15) noch ein Kühlmedium-Sammelraum (18) angeordnet ist, zwischen einander benachbarten Einzelbrennstoffzellen (2) an deren äußeren Randbereichen jeweils ein Dichtmittel (25) vorgesehen ist, so daß der mindestens eine Kühlmedium-Verteilungsraum (15), die Zwischenräume (10) zwischen einander benachbarten Einzelbrennstoffzellen (2) und der mindestens eine Kühlmedium-Sammelraum (18) einen von Kühlmedium (13) durchströmbaren Raum bilden.

2. Brennstoffzellensystem (1) mit einer Mehrzahl an Polymerelektrolytmembran-Einzelbrennstoffzellen (2), die in Form eines Stapels (3) übereinander angeordnet sind,
**dadurch gekennzeichnet, daß**
- einander benachbarte Einzelbrennstoffzellen (2) von bipolaren Platten (7) begrenzt werden, die Durchlässe (12) zur Aufnahme eines Kühlmediums (13) aufweisen,
- an mindestens einer Seitenfläche (23) des Stapels (3) mindestens ein kammerartiger Kühlmedium-Verteilungsraum (15) mit mindestens einer Kühlmedium-Eintrittsöffnung (16) angeordnet ist,
- an mindestens einer Seitenfläche (23, 23') des Stapels (3) mindestens ein kammerartiger Kühlmedium-Sammelraum (18) mit mindestens einer Kühlmedium-Austrittsöffnung (19) angeordnet ist,
- der mindestens eine Kühlmedium-Verteilungsraum (15), die Durchlässe (12) in den bipolaren Platten (7) und der mindestens eine Kühlmedium-Sammelraum (18) einen von Kühlmedium (13) durchströmbaren Raum bilden.

3. Brennstoffzellensystem (1) nach Anspruch 1 oder 2,
**dadurch gekennzeichnet, daß** der mindestens eine Kühlmedium-Verteilungsraum (15) und der mindestens eine Kühlmedium-Sammelraum (18) an zwei einander entgegengesetzten Seitenflächen (23, 23') des Stapels (3) angeordnet sind.

4. Brennstoffzellensystem (1) nach Anspruch 1 oder 2,
**dadurch gekennzeichnet, daß** der mindestens eine Kühlmedium-Verteilungsraum (15) und der mindestens eine Kühlmedium-Sammelraum (18) an derselben Seitenfläche (23) des Stapels (3) angeordnet sind.

5. Brennstoffzellensystem (1) nach einem der Ansprüch 1 bis 4,
**dadurch gekennzeichnet, daß** der mindestens eine Kühlmedium-Verteilungsraum (15) mehrere Kühlmedium-Eintrittsöffnungen (16) aufweist und/oder der mindestens eine Kühlmedium-Sammelraum (18) mehrere Kühlmedium-Austrittsöffnungen (19) aufweist.

6. Brennstoffzellensystem (1) nach einem der Ansprüche 1 bis 5,
**dadurch gekennzeichnet, daß** mehrere Kühlmedium-Verteilungsräume (15) vorgesehen sind, die an derselben Seitenfläche (23) oder an verschiedenen Seitenflächen (23, 23') des Stapels (3) angeordnet sind und/oder mehrere Kühlmedium-Sammelräume (18) vorgesehen sind, die an derselben Seitenfläche (23) oder an verschiedenen Seitenflächen (23, 23') des Stapels (3) angeordnet sind.

7. Brennstoffzellensystem (1) nach einem der Ansprüche 1 bis 6,
**dadurch gekennzeichnet, daß** in dem mindestens einen Kühlmedium-Verteilungsraum (15) eine Kühlmedium-Verteilerstruktur (17) angeordnet ist.

8. Brennstoffzellensystem (1) nach einem der Ansprüche 1 bis 7,
**dadurch gekennzeichnet, daß** die Einzelbrennstoffzellen (2) jeweils mit mindestens einer Brenngaszuführung (30) und/oder mindestens einer Brenngasabführung (31) und/oder mindestens einer Oxidationsmittelzuführung (32) und/oder mindestens einer Oxidationsmittelabführung (33) ausgestattet sind, die innerhalb des von Kühlmedium (13) durchströmbaren Raumes angeordnet sind.

9. Brennstoffzellensystem (1) nach einem der Ansprüche 1 bis 8,
**dadurch gekennzeichnet, daß** an den Enden des Stapels (3) Stromsammler (21) dergestalt angeordnet sind, daß es zwischen einem Stromsammler (21) und der benachbarten Einzelbrenmstoffzelle (2) einen Zwischenraum (10) zur Aufnahme eines Kühlmediums (13) gibt.

10. Brennstoffzellensystem (1) nach einem der Ansprüche 1 bis 9,
**dadurch gekennzeichnet, daß** zwischen Kühlmedium-Verteilungsraum (15) und mindestens einer Seitenfläche (23, 24) des Stapels (3) und zwischen Kühlmedium-Sammelraum (18) und mindestens einer Seitenfläche (23, 24) des Stapels (3) Dichtungen (26) vorgesehen sind.

11. Brennstoffzellensystem (1) nach einem der Ansprüche 1 bis 10, -
**dadurch gekennzeichnet, daß** der Stapel (3) von Endplatten (22) begrenzt wird und Dichtmittel (27) zwischen den Endplatten und den Wandungen des Kühlmedium-Verteilungsraums (15) und/oder den Endplatten (22) und den Wandungen des Kühlmedium-Sammelraums (18) vorgesehen sind.

12. Brennstoffzellensystem (1) nach einem der Ansprüche 1 oder 3 bis 11,
**dadurch gekennzeichnet, daß** in mindestens einem Teil der Zwischenräume (10) Abstandhalter (11) angeordnet sind.

13. Brennstoffzellensystem (1) nach Anspruch 12,
**dadurch gekennzeichnet, daß** die Abstandhalter (11) Kühlmedium-Strömungswege (14) bilden.

14. Brennstoffzellensystem (1) nach Anspruch 12 oder 13,
**dadurch gekennzeichnet, daß** die Abstandhalter (11) elektrisch leitfähig sind.

15. Brennstoffzellensystem (1) nach einem der Ansprüche 12 bis 14,
**dadurch gekennzeichnet, daß** alle Außenoberflächen der Einzelbrennstoffzellen (2) und die Abstandhalter (11) mit elektrisch isolierendem Material und/oder Schutzmaterial umhüllt sind.

16. Brennstoffzellensystem (1) nach einem der Ansprüche 2 oder 5 bis 9,
**dadurch gekennzeichnet, daß** der mindestens eine Kühlmedium-Verteilungsraum (15) und der mindestens eine Kühlmedium-Sammelraum (18) Teil eines Kühlmedium-Mantels sind, der den Stapel (3) vollständig umgibt.

17. Brennstoffzellensystem (1) nach Anspruch 16,
**dadurch gekennzeichnet, daß** der Kühlmedium-Mantel Kühlmediummantel-Seitenflächen aufweist, die an einander entgegengesetzten Seitenflächen (24, 24') des Stapels (3) angeordnet sind, wobei zwischen mindestens einer Kühlmediummantel-Seitenfläche und der gegenüberliegenden Seitenfläche (24, 24') des Stapels (3) ein freier Raum zur Aufnahme von Kühlmedium (13) vorgesehen ist.

18. Verfahren zur Kühlung eines Brennstoffzellensystems (1) mit einer Mehrzahl an Polymerelektrolytmembran-Einzelbrennstoffzellen (2), die in Form eines Stapels (3) übereinander angeordnet sind,
**dadurch gekennzeichnet, daß** ein von einem Kühlmedium durchströmbarer Raum vorgesehen wird, der
- Zwischenräume (10) zwischen einander benachbarten Ebzelbrennstoffzellen (2) oder Durchlässe (12) in bipolaren Platten (7) benachbarter Einzelbrennstoffzellen und
- mindestens einen an einer Seitenfläche (23) des Stapels (3) angeordneten kammerartigen Kühlmedium-Verteilungraum (15) und
- mindestens einen an einer Seitenfläche (23, 23') des Stapels (3) angeordneten kammerartigen Kühlmedium-Sammelraum (18) umfaßt, und
daß ein fluides Kühlmedium (13) durch den von Kühlmedium durchströmbaren Raum geströmt wird.

19. Verfahren nach Anspruch 18,
**dadurch gekennzeichnet, daß** mehrere Kühlmedium-Verteilungsräume (15) und/oder -Sammelräume (18) zur Kühlung verschiedener Bereiche des Staples (3) vorgesehen werden, wobei in die verschiedenen Kühlmedium-Verteilungsräume (15) gewünschtenfalls Kühlmedium (13) verschiedener Volumenströme und/oder verschiedener Temperatur eingespeist wird.

20. Verfahren nach Anspruch 18 oder 19,
**dadurch gekennzeichnet, daß** das Kühlmedium die Zwischenräume (10) oder die Durchlässe (12) in hydraulischer Parallelschaltung durchströmt.

21. Verfahren nach einem der Ansprüche 18 bis 20,
**dadurch gekennzeichnet, daß** das Kühlmedium verschiedene Bereiche eines Zwischenraums (10) oder verschiedene Durchlässe (12) innerhalb einer bipolaren Platte (7) mit unterschiedlicher Geschwindigkeit durchströmt.

22. Verfahren nach einem der Ansprüche 18 bis 21,
**dadurch gekennzeichnet, daß** als Kühlmedium ein elektrisch nicht, schwach oder stark leitendes, wäßriges oder nicht wäßriges fluides Medium verwendet wird.

23. Verfahren nach einem der Ansprüche 18 bis 22,
**dadurch gekennzeichnet, daß** aus dem Brennstoffzellensystem (1) austretendes erwärmtes Kühlmedium direkt in einen Heizkreislauf eingespeist wird.

24. Verfahren nach einem der Ansprüche 18 bis 23,
**dadurch gekennzeichnet, daß** der Druckverlust zwischen dem Eintritt des Kühlmediums (13) in den Stapel (3) und dem Austritt des Kühlmediums (13) aus dem Stapel weniger als 50000 Pa, bevorzugt weniger als 5000 Pa, beträgt.

25. Verfahren nach einem der Ansprüche 18 bis 24,
**dadurch gekennzeichnet, daß** als Kühlmedium (13) ein nichtwäßriges, bevorzugt elektrisch isolierendes, Kühlmedium oder ein Frostschutzmittel enthaltendes Kühlmedium verwendet wird.

26. Verfahren nach einem der Ansprüche 18 bis 25,
**dadurch gekennzeichnet, daß** die Zuführungen (30) und/oder die Abführungen (31) für Brenngas und/oder die Zuführungen (32) und/oder die Abführungen (33) für Oxidationsmittel zu den Einzelbrennstoffzellen (2) innerhalb des von Kühlmedium (13) durchströmbaren Raumes angeordnet werden und das Kühlmedium diese Zuführungen und/oder Abführungen umströmt.

## Claims

1. Fuel-cell system (1) with a plurality of polymer electrolyte membrane fuel cells (2) arranged above one another in the form of a stack (3),
**characterised in that**
- an intermediate space (10) to admit a coolant (13) is provided between adjacent fuel cells (2) in the stack (3);
- there is on at least one side face (23) of the stack (2) an enclosed coolant distribution chamber (15) with at least one coolant inlet port (16),
- there is on at least one side face (23, 23') of the stack (3) at least one enclosed coolant collecting chamber (18) with at least one coolant outlet port (19),
- on the side faces (24) of the stack (3) on which there is neither a coolant distribution chamber (15) nor a coolant collecting chamber (18) a sealing element (25) is provided between adjacent fuel cells (2) in their outer peripheral areas, so that the at least one coolant distribution chamber (15), the intermediate spaces (10) between adjacent fuel cells (2) and the at least one coolant collecting chamber (18) form an enclosed space through which coolant (13) can flow.

2. Fuel-cell system (1) with a plurality of polymer electrolyte membrane fuel cells (2) arranged above one another in the form of a stack (3),
**characterised in that**
- adjacent fuel cells (2) are bounded by bipolar plates (7) with openings (12) in them to admit a coolant (13),
- there is on at least one side face (23, 23') of the stack (3) at least one enclosed coolant distribution chamber (15) with at least one coolant inlet port (16),
- there is on at least one side face (23, 23') of the stack (3) at least one enclosed coolant collecting chamber (18) with at least one coolant outlet port (19),
- the at least one coolant distribution chamber (15), the openings (12) in the bipolar plates (7) and the at least one coolant collecting chamber (18) form an enclosed space through which coolant (13) can flow.

3. Fuel-cell system (1) as described in Claim 1 or 2,
**characterised in that** the at least one coolant distribution chamber (15) and the at least one coolant collecting chamber (18) are located on two opposite side faces (23, 23') of the stack (3).

4. Fuel-cell system (1) as described in Claim 1 or 2,
**characterised in that** the at least one coolant distribution chamber (15) and the at least one coolant collecting chamber (18) are located on the same side face (23) of the stack (3).

5. Fuel-cell system (1) as described in one of Claims 1 to 4, **characterised in that** the at least one coolant distribution chamber (15) possesses several coolant inlet ports (16) and/or the at least one coolant collecting chamber (18) possesses several coolant outlet ports (19).

6. Fuel-cell system (1) as described in one of Claims 1 to 5,
**characterised in that** several coolant distribution chambers (15) are provided which are located on the same side face (23) or on different side faces (23, 23') of the stack (3) and/or several coolant collecting chambers (18) are provided which are located on the same side face (23) or on different side faces (23, 23') of the stack (3).

7. Fuel-cell system (1) as described in one of Claims 1 to 6,
**characterised in that** in the at least one coolant distribution chamber (15) a coolant distribution structure (17) is provided.

8. Fuel-cell system (1) as described in one of Claims 1 to 7,
**characterised in that** the fuel cells (2) are each equipped with at least one fuel-gas inlet (30) and/or at least one fuel-gas outlet (31) and/or at least one oxidant inlet (32) and/or at least one oxidant outlet (33), these being located within the enclosed space through which coolant (13) can flow.

9. Fuel-cell system (1) as described in one of Claims 1 to 8, **characterised in that** at the ends of the stack (3) current collectors (21) are arranged in such a way that between one current collector (21) and the adjacent fuel cell (2) there is an intermediate space (10) to admit a coolant (13).

10. Fuel-cell system (1) as described in one of Claims 1 to 9,
**characterised in that** seals (26) are provided between the coolant distribution chamber (15) and at least one side face (23, 24) of the stack (3) and between the coolant collecting chamber (18) and at least one side face (23, 24) of the stack (3).

11. Fuel-cell system (1) as described in one of Claims 1 to 10,
**characterised in that** the stack (3) is bounded by end plates (22) and sealing elements (27) between the end plates and the walls of the coolant distribution chamber (15) and/or the end plates (22) and the walls of the coolant collecting chamber (18).

12. Fuel-cell system (1) as described in one of Claims 1 or 3 to 11,
**characterised in that** spacers (11) are provided in at least some of the intermediate spaces (10).

13. Fuel-cell system (1) as described in Claim 12,
**characterised in that** the spacers (11) form coolant flow paths (14).

14. Fuel-cell system (1) as described in Claim 12 or 13,
**characterised in that** the spacers (11) are electrically conductive.

15. Fuel-cell system (1) as described in one of Claims 12 to 14,
**characterised in that** all the outer surfaces of the fuel cells (2) and the spacers (11) are encased in electrically insulating material and/or protective material.

16. Fuel-cell system (1) as described in one of Claims 2 or 5 to 9,
**characterised in that** the at least one coolant distribution chamber (15) and the at least one coolant collecting chamber (18) are part of a coolant casing which completely surrounds the stack (3).

17. Fuel-cell system (1) as described in Claim 16, **characterised in that** the coolant casing possesses coolant-casing side faces arranged on opposite side faces (24, 24') of the stack (3), an unobstructed space for admitting coolant (13) being provided between at least one coolant-casing side face and the opposite side face (24, 24') of the stack (3).

18. Method for cooling a fuel-cell system (1) with a plurality of polymer electrolyte membrane fuel cells (2) arranged above one another in the form of a stack (3),
**characterised in that** a space through which a coolant can flow is provided comprising
- intermediate spaces (10) between adjacent fuel cells (2) or openings (12) in bipolar plates (7) of adjacent fuel cells (2) and
- at least one enclosed coolant distribution chamber (15) located on a side face (23) of the stack (3) and
- at least one enclosed coolant collecting chamber (18) located on a side face (23, 23') of the stack (3), and
that a fluid coolant (13) is passed through the space through which coolant can flow.

19. Method as described in Claim 18,
**characterised in that** several coolant distribution chambers (15) and/or collecting chambers (18) are provided for cooling different parts of the stack (3), coolant (13) being fed into the different coolant distribution chambers (15) if required at different volumetric flow rates and/or different temperatures.

20. Method as described in Claim 18 or 19,
**characterised in that** the coolant passes through the intermediate spaces (10) or openings (12) in a hydraulic parallel circuit.

21. Method as described in one of Claims 18 to 20,
**characterised in that** the coolant passes through different parts of an intermediate space (10) or different openings (12) within a bipolar plate (7) at different velocity.

22. Method as described in one of Claims 18 to 21,
**characterised in that** an electrically non-, weakly or highly conductive, aqueous or non-aqueous fluid medium is used as the coolant.

23. Method as described in one of Claims 18 to 22,
**characterised in that** heated coolant emerging from the fuel-cell system is fed direct into a heating circuit.

24. Method as described in one of Claims 18 to 23,
**characterised in that** the pressure drop between entry of the coolant (13) into the stack (3) and emergence of the coolant (13) from the stack (3) is less than 50000 Pa, preferably less than 5000 Pa.

25. Method as described in one of Claims 18 to 24,
**characterised in that** a non-aqueous, preferably electrically insulating, coolant or a coolant containing antifreeze is used as the coolant.

26. Method as described on one of Claims 18 to 25,
**characterised in that** the inlets (30) and/or outlets (31) for fuel gas and/or the inlets (32) and/or outlets (33) for oxidant are arranged within the space through which coolant can flow and that the coolant (13) flows round these inlets and/or outlets.

## Revendications

1. Système de piles à combustible (1) avec plusieurs piles à combustible individuelles à membrane électrolytique polymère (2) qui sont superposées sous la forme d'un empilement (3), **caractérisé**
- **en ce qu'**il est prévu entre les piles à combustible individuelles (2) de l'empilement (3) qui sont voisines un espace intermédiaire (10) destiné à recevoir un agent réfrigérant (13),
- **en ce qu'**il est prévu sur au moins une surface latérale (23) de l'empilement (3) au moins un espace de répartition d'agent réfrigérant en forme de chambre (15) avec au moins une ouverture d'entrée d'agent réfrigérant (16),
- **en ce qu'**il est prévu sur au moins une surface latérale (23, 23') de l'empilement (3) au moins un espace collecteur d'agent réfrigérant en forme de chambre (18) avec au moins une ouverture de sortie d'agent réfrigérant (19),
- **en ce que** sur les surfaces latérales (24) de l'empilement (3) sur lesquelles il n'y a ni espace de répartition d'agent réfrigérant (15), ni espace collecteur d'agent réfrigérant (18), il est prévu un moyen d'étanchéité (25) entre des piles individuelles (2) voisines, dans des zones de bordure extérieures de celles-ci, de sorte que ledit espace de répartition (15), les espaces intermédiaires (10) entre des piles (2) voisines et ledit espace collecteur (18) forment un espace apte à être traversé par l'agent réfrigérant (13).

2. Système de piles à combustible (1) avec plusieurs piles à combustible individuelles à membrane électrolytique polymère (2) qui sont superposées sous la forme d'un empilement (3), **caractérisé**
- **en ce que** les piles à combustible individuelles (2) voisines sont délimitées par des plaques bipolaires (7) qui présentent des passages (12) pour recevoir un agent réfrigérant (13),
- **en ce qu'**il est prévu sur au moins une surface latérale (23) de l'empilement (3) au moins un espace de répartition d'agent réfrigérant en forme de chambre (15) avec au moins une ouverture d'entrée d'agent réfrigérant (16),
- **en ce qu'**il est prévu sur au moins une surface latérale (23, 23') de l'empilement (3) au moins un espace collecteur d'agent réfrigérant en forme de chambre (18) avec au moins une ouverture de sortie d'agent réfrigérant (19),
- **en ce que** ledit espace de répartition d'agent réfrigérant (15), les passages (12) prévus dans les plaques bipolaires (7) et ledit espace collecteur d'agent réfrigérant (18) forment un espace apte à être traversé par l'agent réfrigérant (13).

3. Système de piles à combustible (1) selon la revendication 1 ou 2, **caractérisé en ce que** ledit espace de répartition d'agent réfrigérant (15) et ledit espace collecteur d'agent réfrigérant (18) sont disposés sur deux surfaces latérales opposées (23, 23') de l'empilement (3).

4. Système de piles à combustible (1) selon la revendication 1 ou 2, **caractérisé en ce que** ledit espace de répartition d'agent réfrigérant (15) et ledit espace collecteur d'agent réfrigérant (18) sont disposés sur la même surface latérale (23) de l'empilement (3).

5. Système de piles à combustible (1) selon l'une des revendications 1 à 4, **caractérisé en ce que** ledit espace de répartition d'agent réfrigérant (15) présente plusieurs ouvertures d'entrée d'agent réfrigérant (16) et/ou ledit espace collecteur d'agent réfrigérant (18) présente plusieurs ouvertures de sortie d'agent réfrigérant (19).

6. Système de piles à combustible (1) selon l'une des revendications 1 à 5, **caractérisé en ce qu'**il est prévu plusieurs espaces de répartition d'agent réfrigérant (15) qui sont disposés sur la même surface latérale (23) ou sur différentes surfaces latérales (23, 23') de l'empilement (3), et/ou il est prévu plusieurs espaces collecteurs d'agent réfrigérant (18) qui sont disposés sur la même surface latérale (23) ou sur différentes surfaces latérales (23, 23') de l'empilement (3).

7. Système de piles à combustible (1) selon l'une des revendications 1 à 6, **caractérisé en ce qu'**il est prévu dans ledit espace de répartition d'agent réfrigérant (15) une structure de répartition d'agent réfrigérant (17).

8. Système de piles à combustible (1) selon l'une des revendications 1 à 7, **caractérisé en ce que** les piles à combustible individuelles (2) sont équipées chacune d'au moins une amenée de gaz combustible (30) et/ou d'au moins une évacuation de gaz combustible (31) et/ou d'au moins une amenée d'oxydant (32) et/ou d'au moins une évacuation d'oxydant (33) qui sont disposées à l'intérieur de l'espace apte à être traversé par l'agent réfrigérant (13).

9. Système de piles à combustible (1) selon l'une des revendications 1 à 8, **caractérisé en ce que** des accumulateurs de courant (21) sont disposés aux extrémités de l'empilement (3) de telle sorte qu'il y ait entre un accumulateur de courant (21) et la pile de combustible individuelle (2) voisine un espace intermédiaire (10) pour recevoir un agent réfrigérant (13).

10. Système de piles à combustible (1) selon l'une des revendications 1 à 9, **caractérisé en ce que** des joints d'étanchéité (26) sont prévus entre l'espace de répartition d'agent réfrigérant (15) et au moins une surface latérale (23, 24) de l'empilement (3), et entre l'espace collecteur d'agent réfrigérant (18) et au moins une surface latérale (23, 24) de l'empilement (3).

11. Système de piles à combustible (1) selon l'une des revendications 1 à 10, **caractérisé en ce que** l'empilement (3) est délimité par des plaques d'extrémité (22), et des moyens d'étanchéité (27) sont prévus entre les plaques d'extrémité et les parois de l'espace de répartition d'agent réfrigérant (15) et/ou entre les plaques d'extrémité (22) et les parois de l'espace collecteur d'agent réfrigérant (18).

12. Système de piles à combustible (1) selon l'une des revendications 1 ou 3 à 11, **caractérisé en ce que** des écarteurs (11) sont disposés dans une partie au moins des espaces intermédiaires (10).

13. Système de piles à combustible (1) selon la revendication 12, **caractérisé en ce que** les écarteurs (11) forment des voies d'écoulement d'agent réfrigérant (14).

14. Système de piles à combustible (1) selon la revendication 12 ou 13, **caractérisé en ce que** les écarteurs (11) sont conducteurs d'électricité.

15. Système de piles à combustible (1) selon l'une des revendications 12 à 14, **caractérisé en ce que** toutes les surfaces extérieures des piles à combustible individuelles (2) et les écarteurs (11) sont enrobés d'un matériau électriquement isolant et/ou d'un matériau de protection.

16. Système de piles à combustible (1) selon l'une des revendications 2 ou 5 à 9, **caractérisé en ce que** ledit espace de répartition d'agent réfrigérant (15) et ledit espace collecteur d'agent réfrigérant (18) font partie d'une enveloppe d'agent réfrigérant qui entoure entièrement l'empilement (3).

17. Système de piles à combustible (1) selon la revendication 16, **caractérisé en ce que** l'enveloppe d'agent réfrigérant présente des surfaces latérales qui sont disposées sur des surfaces latérales opposées (24, 24') de l'empilement (3), un espace libre destiné à recevoir l'agent réfrigérant (13) étant prévu entre au moins une surface latérale d'enveloppe et la surface latérale opposée (24, 24') de l'empilement (3).

18. Procédé pour refroidir un système de piles à combustible (1) comprenant plusieurs piles à combustible individuelles à membrane électrolytique polymère (2) qui sont superposées sous la forme d'un empilement (3),
**caractérisé en ce qu'**il est prévu un espace apte à être traversé par un agent réfrigérant, qui comprend
- des espaces intermédiaires (10) entre les piles individuelles (2) voisines, ou des passages (12) dans des plaques bipolaires (7) de piles voisines,
- au moins un espace de répartition d'agent réfrigérant en forme de chambre (15) qui est disposé sur une surface latérale (23) de l'empilement (3), et
- au moins un espace collecteur d'agent réfrigérant en forme de chambre (18) qui est disposé sur une surface latérale (23, 23') de l'empilement (3),
et **en ce qu'**on fait passer un agent réfrigérant (13) fluide dans l'espace apte à être traversé par un agent réfrigérant.

19. Procédé selon la revendication 18, **caractérisé en ce qu'**il est prévu plusieurs espaces de répartition (15) et ou collecteurs d'agent réfrigérant (18) pour refroidir différentes zones de l'empilement (3), un agent réfrigérant (13) avec des courants volumiques différents et/ou des températures différentes étant amené si cela est souhaitable dans les différents espaces de répartition d'agent réfrigérant (15).

20. Procédé selon la revendication 18 ou 19, **caractérisé en ce que** l'agent réfrigérant traverse les espaces intermédiaires (10) ou les passages (12) avec un montage hydraulique parallèle.

21. Procédé selon l'une des revendications 18 à 20, **caractérisé en ce que** l'agent réfrigérant traverse différentes zones d'un espace intermédiaire (10) ou différents passages (12) à l'intérieur d'une plaque bipolaire (7) à des vitesses différentes.

22. Procédé selon l'une des revendications 18 à 21, **caractérisé en ce qu'**on utilise comme agent réfrigérant un agent fluide fortement, faiblement ou non conducteur d'électricité, aqueux ou non aqueux.

23. Procédé selon l'une des revendications 18 à 22, **caractérisé en ce que** l'agent réfrigérant chauffé qui sort du système de piles à combustible (1) est amené directement dans un circuit de chauffage.

24. Procédé selon l'une des revendications 18 à 23, **caractérisé en ce que** la perte de pression entre l'entrée de l'agent réfrigérant (13) dans l'empilement (3) et sa sortie dudit empilement est de moins de 50000 Pa, de préférence de moins de 5000 Pa.

25. Procédé selon l'une des revendications 18 à 24, **caractérisé en ce qu'**on utilise comme agent réfrigérant (13) un agent réfrigérant non aqueux, de préférence isolant électriquement, ou un agent réfrigérant contenant de l'antigel.

26. Procédé selon l'une des revendications 18 à 25, **caractérisé en ce que** les amenées (30) et/ou les évacuations (31) prévues pour le gaz combustible, et/ou les amenées (32) et/ou les évacuations (33) prévues pour l'oxydant vers les piles à combustible individuelles (2) sont disposées à l'intérieur de l'espace apte à être traversé par l'agent réfrigérant (13), et l'agent réfrigérant passe autour de ces amenées et/ou évacuations.
